# EUROPÄISCHE PATENTSCHRIFT

(11) **EP 1 297 810 B1**
(45) Veröffentlichungstag und Bekanntmachung des Hinweises auf die Patenterteilung: **11.10.2006**
(21) Anmeldenummer: 01890277.5
(22) Anmeldetag: 26.09.2001
(51) Int. Cl.: A61G 12/00

(54) **Medizinische Versorgungseinheiten**
Medical supply unit
Unité d'alimentation médicale

(43) Veröffentlichungstag der Anmeldung: 02.04.2003
(73) Patentinhaber: TRILUX-LENZE GmbH + Co. KG, 59759 Arnsberg (DE)
(72) Erfinder: Lenze, Fritz Peter, Ing., 2380 Perchtoldsdorf (AT)
(74) Vertreter: Lippert, Stachow & Partner

(56) Entgegenhaltungen:
- EP-A- 0 551 600
- EP-A- 0 882 851
- US-A- 4 753 055

## Beschreibung

Die Erfindung bezieht sich auf eine medizinische Versorgungseinheit für Krankenbetten der Normal-, Intermediär- und Intensivpflege, die länglich und im wesentlichen geschlossen ist, mit einem Kanal für Medienleitungen für elektrische oder gasförmige Medien und mit Steckdosen, Anschlüssen für Computer, Monitore, Telefonsysteme, Fernseher, Gasleitungen o. dgl..

Eine derartige medizinische Versorgungseinheit ist aus der EP 0 882 851 A2 bekannt. Diese Druckschrift offenbart eine Versorgungseinheit in Form eines Versorgungsschrankes, der sowohl elektrische Leitungen, als auch Gasleitungen beherbergt. Die Versorgungseinheit ist in Form eines einen trapezoidförmigen Grundriss aufweisenden, kastenähnlichen Schrankes ausgebildet, an dessen Seitenwänden die elektrischen Steckdosen angeordnet sind und an dessen Frontwand, die als Türe ausgebildet ist, die Gasleitungen münden. Diese Gasleitungen sind mit Verstrebungen an der Rückwand dieses Schrankes fest verbunden und enden in Durchbrechungen der Türe, ohne mit ihr verbunden zu sein, so dass keinerlei Justierungen notwendig sind und so, dass die Gasleitungen durch Öffnen der Türe für eine Inspektion leicht zur Verfügung stehen als dies bis dahin möglich war. Nachteilig an diesem Schrank ist der große Platzbedarf, sowohl an der Wand als auch am Boden, der nur für die Zuleitung der einzelnen Medien genutzt wird. Ein weiterer Nachteil ist die durch nichts zu kaschierende "Technizität" dieser vorbekannten Lösung, die jedem Krankenbett einen massiven und das Bett optisch dominierenden technischen Versorgungsschrank zuordnet. Ein weiterer Nachteil ist die Notwendigkeit, jeden dieser Schränke eines Zimmers einzeln anzuspeisen, auf die damit verbundene Problematik wird in der Druckschrift nicht eingegangen. Besonders nachteilig wirkt sich in diesem Zusammenhang aus, dass die aus der Decke, der Wand oder Kabelkanälen kommenden Medienleitungen in den Kasten geführt, dort verlegt und von hinten an die an der Frontseite des Schrankes vorgesehenen Steckdosen und Gasanschlüsse angeschlossen werden müssen. Dies kann nur von einem qualifizierten Fachmann durchgeführt werden und erfordert zeitintensive und äußerst genaue Arbeitsschritte.

Die EP 0 551 600 A1 offenbart eine Versorgungseinheit, die ein langgestrecktes, horizontales Gehäuse aufweist, dessen Inneres durch eine Trennwand in zwei Kanäle unterteilt ist. De facto handelt es sich dabei weniger um eine Versorgungseinheit, sondern eher um einen speziell ausgeführten Kabelkanal. Um zu verhindern, dass aufgrund von Defekten in elektrischen Leitungen Explosionen in benachbarten Gasleitungen stattfinden, werden im oberen Kanal die elektrischen Leitungen geführt und im unteren Kanal die Gas- bzw. Vakuumleitungen. In den Abdeckplatten der beiden Kanäle sind Steckdosen bzw. Gasanschlüsse zum Anschließen von medizinischen Geräten vorgesehen. Derartige Versorgungseinheiten sind horizontal an den Wänden eines Krankenzimmers befestigt. In aufwendiger und von einem Fachmann durchzuführender Arbeit müssen die Medienleitungen, Stromkabel bzw. Gasleitungen, die aus der Wand oder der Decke in die Versorgungseinheit geführt werden, verlegt und mit den Steckdosen bzw. Gasanschlüssen verbunden werden. Das Verlegen dieser Medienleitungen, die zumeist von einem zentralen Strom- bzw. Gasversorgungsraum über einen Deckenverbau oder in Wänden verlaufend in das Krankenzimmer geführt werden, erfordert viel Zeit und Genauigkeit. Ein unvermeidliches Kabelwirrwarr kann dabei zu fehlerhaften Anschlüssen führen, wodurch Gefahren für Patienten und medizinische Geräte entstehen.

Für die Versorgung von Patienten ist es notwendig, eine ganze Reihe technischer Hilfsmittel zur Verfügung zu stellen. Dies fängt bei einfacher Stromversorgung für den Betrieb von Lampen oder Leuchten und von medizinischen Geräten an, führt zu besonders gesicherten, unterbrechungsfreien, Stromversorgungen, schließt Telefon- und/oder Netzanschlüsse für Computer, Überwachungs- oder Monitoringsysteme, mit denen die verschiedensten Körperfunktionen oder auch Bilder des Patienten überwacht bzw. an Überwachungsstellen übertragen werden können mit ein und betrifft schließlich auch die Versorgung mit den unterschiedlichsten medizinischen Gasen, wie Sauerstoff, Lachgas, Stickstoff, Druckluft und, im medizinischen Bereich auch zu den medizinischen Gasen gezählt, Vakuum.

All diese Medien müssen unter Beachtung äußerst strenger technischer Normen und Sicherheitsvorschriften (vorgeschriebene Mindestabstände, Abschirmungsnormen, vorgeschriebenen Abschottungen, etc.) angeboten werden und sollen dabei doch in möglichst unmittelbarer Nachbarschaft des Patienten zur Verfügung stehen.

Es kommen in der modernen Medizin noch zwei Aspekte dazu, die durch die bisher genannten Aspekte, der medizinischen Notwendigkeit und der Sicherheitstechnik, nicht berührt werden: einerseits die Kostenfrage für die Installation und Wartung derartiger Systeme, andererseits die Frage der Ästhetik, da die Erkenntnis mehr und mehr um sich greift, daß Patienten um so rascher genesen, je ansprechender und freundlicher ihr Ambiente ist. Es muß dabei auch daran gedacht werden, daß durch die moderne medizinische Versorgung eine große Anzahl an Patienten, insbesonders in der Geriatrie, lange Zeit, oft Jahre, in ein und demselben Raum bzw. Bett verbringen und daher auf die ihnen gebotene Umgebung besonders ansprechen. Der Anblick zahlreicher Schläuche und Kabel um ein Krankenbett herum, stellt keinen positiven Beitrag zur Genesung von Patienten dar.

Betreffend die Installation und Wartung der verschiedenen Versorgungsnetze ist darauf hinzuweisen, daß die Gasleitungen periodisch überprüft werden müssen, dass genormte Mindestabstände zwischen Gasleitungen und stromführenden Verbrauchersteckdosen eingehalten werden müssen, dass es auch innerhalb der stromführenden Leitungen notwendig ist, auf Abschirmbedingungen Bedacht zu nehmen und dass hier einerseits ein gewisser Platzbedarf besteht, der aber andererseits nicht dazu führen soll, toten Raum in Krankenhäusern einzunehmen, in denen ja Quadratmeterpreise für die Errichtung und Instandhaltung anfallen, die weit über denen in üblichen Gebäuden liegen.

Es ist Aufgabe der Erfindung, im Lichte der obigen Ausführungen die Versorgung eines Krankenbettes mit den verschiedenen gasförmigen und elektromedizinischen Medien sicherzustellen, wobei die Flexibilität sowohl der Auswahl aus den Medien als auch der optischen Darbietung und der Kombination mit optisch ansprechenden Möbeln beachtet werden soll und auch die Installations- und Wartungskosten durch Vereinfachung derselben weiter gedrückt werden sollen.

Erfindungsgemäß werden diese Ziele mit einer eingangs erwähnten medizinischen Versorgungseinheit durch die Merkmale des Anspruchs 1 erreicht.

Bevorzugte Ausführungsformen der Erfindung sind den Unteransprüchen zu entnehmen.

Eine derartige modulartige MVE kann nun, ohne dass die Gefahr einer Beschädigung besteht, in einer Tischlerei oder Möbelfabrik in entsprechende Schränke eingebaut werden, ohne dass dabei ein nennenswerter Mehraufwand bei der Möbelherstellung notwendig ist. Im Gegenteil, es entfällt das Bohren zahlreicher Löcher und Ausnehmungen für Dosen u.dgl. und es wird sichergestellt, dass die MVE genau passend im Möbel im Spital angeliefert wird. Das Möbel selbst kann als Patientengarderobeschrank dienen und bietet zusätzlich Stauraum für medizinische Ausrüstung des Schwesternpersonals. Schrankhöhe-Breite- Tiefe, allfällige Einbauten wie Wertschließfach, Kühlschrank etc. werden den Architektenwünschen angepasst.

Gemäß einem wesentlichen Aspekt der Erfindung erfolgt die Zuleitung der Medien in einem horizontal verlaufenden und vor der Wand (Überputz) angeordneten Kanal, beispielsweise einem 3-Kammer- Kanal, der an der Stelle, an der der Garderobeschrank zu plazieren ist, über die entsprechenden Öffnungen zum Durchtritt der Leitungen verfügt und auf den das Möbel aufgesetzt wird. Durch diese Maßnahme erreicht man eine punktgenaue Justierung zwischen der Zuleitung und den in den MVE's vorgesehenen Steckdosen bzw. den in den Modulen angeordneten Anschlussverteilern , wodurch sowohl die Montage der Möbel als auch das anschließende Verlegen und Anschließen der Verbindungsleitungen erleichtert wird. An der Rückseite des Garderobeschrankes verläuft über die gesamte Breite eine Nut im Querschnitt des horizontalen 3-Kammer Zuleitungskanals. Der Garderobeschrank mit 1-oder 2-seitig integrierten MVE's wird bevorzugt mit Bodenfreiheit (ca. 30cm über FOK) gefertigt, sodass die erforderliche Hygiene durch leichte Zugänglichkeit gewährleistet ist.
Es ist bei dieser erfindungsgemäßen Ausgestaltung nur mehr notwendig, die auf die richtige Länge gebrachten Verbindungskabel bzw. Schläuche oder auch Rohre im Kanal einzuziehen oder, besonders im Fall von Rohren, bereits vor dem Aufsetzen des Möbels in den Kanal einzulegen und kann sodann die Montage direkt erfolgen. Da in der Spitalstechnik heute für die einzelnen Medien untereinander unverwechselbare Stecker verwendet werden, ist dieses Verbinden der Leitungsenden mit den Anschlußstellen der MVE's eine einfache und auch von angelernten Hilfskräften durchzuführende Tätigkeit.

Gemäß einem weiteren Aspekt der Erfindung bestehen die MVE's im wesentlichen aus einem Profil, das entweder einteilig oder durch ein Abdeckprofil einen geschlossenen länglichen Hohlraum ausbildet und das auf einer seiner Längsseiten die jeweils gewünschten Steckdosen oder Gasentnahmestellen in der passenden Anordnung trägt. Die Enden der Profile sind verschlossen, um jeglichen Zutritt Unbefugter zu unterbinden und auch um das Eindringen von Staub zu verhindern. Bevorzugt im unteren Teil der Profile befinden sich Anschlussverteiler in Form üblicher Klemmen, Steckverbindungen, etc.. Die Gesamtlänge der MVE's orientiert sich an der Schrankhöhe und ist mit dem Architekten bzw. Möbelhersteller abzusprechen.

In einer bevorzugten Variante ist das Profil, entweder einteilig oder durch Verbindung mit seitlichen Profilen, auf der dem Raum zugewandten Seite leicht konkav oder U-förmig ausgebildet und kann durch einen anderen Profilabschnitt, der konvex ausgebildet ist, unter Schaffung eines oben und unten offenen länglichen Hohlraumes abgedeckt werden. Auf diese Weise ist es möglich, die Steckdosen, auch diejenigen, in die Kabel oder Schläuche gesteckt sind, abzudecken und optisch zu kaschieren. Es hat dies den weiteren Vorteil, einen allzu leichten Zugriff, beispielsweise durch verwirrte Patienten oder neugierige Besucher, zu verhindern und trägt so zur Erhöhung der Sicherheit bei. Dieses verschiebliche oder aufsetzbare Profil kann beispielsweise durch magnetische Kräfte, durch Aufklipsen, oder auch durch Reibungsschluß gehalten werden.

Die Erfindung wird im folgenden an Hand der Zeichnung näher erläutert. Dabei zeigt
die Fig. 1 eine rein schematische Ansicht in Draufsicht auf eine Wand, an der erfindungsgemäße Module in passenden medizinischen Möbeln eingebaut, befestigt sind,
die Fig. 2 einen Schnitt entlang der Linie II-II der Fig. 1 und
die Fig. 3 einen Schnitt entlang der Linie III-III der Fig. 1.

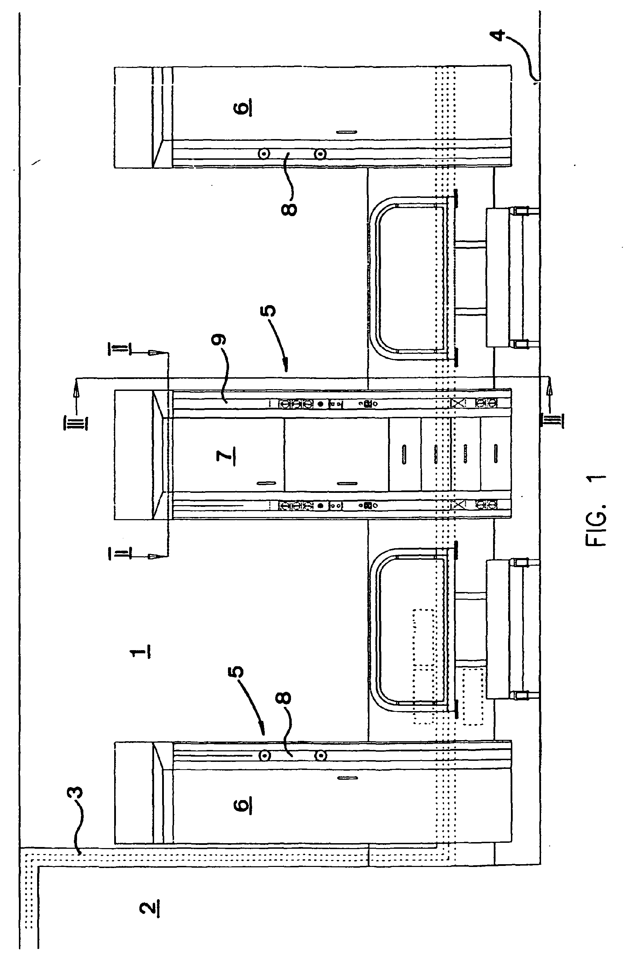

Wie aus Fig. 1 ersichtlich ist, ist in der dargestellten bevorzugten Ausführungsform für die Versorgung zweier zueinander parallel angeordneter und mit ihren Kopfenden an eine Wand anstoßende Betten folgende Anordnung vorgesehen: Eine Wand 1 eines typischen Krankenhauszimmers stößt an einem ihrer Enden an einen Flur oder eine Naßzelle 2, in der üblicherweise alle medizinischen Medien, die diesem Zimmer zugeführt werden, in einer Anschlußbox, einem Versorgungskasten od.dgl. enden. Von diesem Bereich aus führt ein Zuleitungskanal 3 zu den einzelnen Betten. Erfindungsgemäß wird nun dieser zumindest teilweise über Putz verlegte Zuleitungskanal 3 im unteren Bereich des Zimmers, aber doch im Abstand von der Fußbodenoberkante 4 waagrecht verlegt und weist an den Stellen, an denen medizinische Versorgungseinheiten (MVE's) 5 angebracht werden sollen, Ausnehmungen an seiner Oberseite und/oder Unterseite und/oder Frontseite auf.

Die Versorgungseinheiten 5 bestehen aus im wesentlichen üblichen Krankenhausmöbeln 6, 7, in die erfindungsgemäße MVE's 8, 9 eingebaut sind. Innerhalb dieser Module verlaufen die Medienleitungen von ihrer jeweiligen Anschlußstelle für das medizinische Personal bis zu einem Anschlussverteiler im unteren Bereich der MVE. Von dort verlaufen Verbindungsleitungen zum Zuleitungskanal 3 bzw. in einem bis zur Verteilerbox im Naßraum oder Flur 2. Die Möbel 6 sind mit entsprechenden Ausnehmungen auf den Zuleitungskanal 3 aufgesetzt, wobei durch entsprechende Markierungen oder Vorsprünge/Ausnehmungen ein passgenauer Sitz für den Übergang der Medienleitungen vom Möbel 6 zum Zuleitungskanal 3 gesorgt wird. Selbstverständlich werden die Möbel 6 in der Folge auch an der Wand, beispielsweise durch Dübel und Schrauben, montiert.

Die Module 8, 9 sind so aufgebaut, dass jeder Modul nur Medien, die untereinander problemlos kombinierbar und nahe zueinander führbar und benachbart zugänglich sein dürfen, angeordnet sind. So ist beispielsweise im gezeigten Ausführungsbeispiel im Modul 8 die Versorgung mit den medizinischen Gasen (wie oben ausgeführt, gehört auch Vakuum dazu) untergebracht, während im Modul 9 die Versorgung mit Energie und die gesamte Datenversorgung, somit Stark- und Schwachstrom, untergebracht ist. Zufolge dieser Trennung sind eine ganze Reihe von wesentlichen Sicherheitsvorschriften systemimmanent permanent erfüllt und eine ganze Reihe von Problemen ist dadurch ausgeschaltet.

Die Unterbringung der MVE's in den Möbeln 6, 7 hat darüberhinaus den Vorteil, dass die Module in leicht handhabbaren Einheiten untergebracht sind, die darüber hinaus auch dem Patienten und dem Spitalspersonal Vorteile bieten, da in diesen Möbeln genügend Platz für persönliches Eigentum, für medizinische Gegenstände, die im Krankenzimmer verbleiben sollen etc., vorhanden ist.

Im oberem Bereich des Garderobeschrankes kann auf Wunsch Indirektbeleuchtung untergebracht sein und können im Möbel oder zwischen zwei benachbarten Schränken Leseleuchten, Normgerätetragschienen. für Anbringung von Infusionsflaschenhaltern etc. und sonstigen medizinischen Geräten od. dgl. vorgesehen sein, die jeweils auch über die MVE 9 mit elektrischem Strom und/oder Daten versorgt werden können.

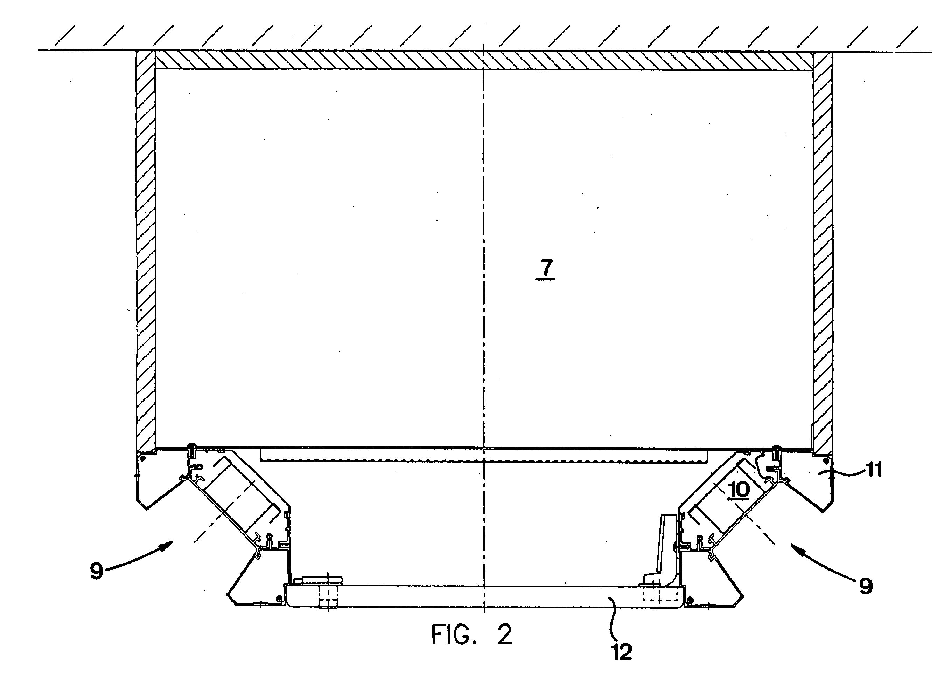

Die Fig. 2 zeigt einen rein schematischen Schnitt durch eine erfindungsgemäße MVE 9, die in einem Spitalmöbel 7 untergebracht ist. MVE 9 besteht aus einem Profil, das zumindest über einen im wesentlichen geschlossenen Kanal 10 verfügt. In diesem Kanal 10 bzw. in den Kanälen verlaufen die einzelnen Medienleitungen und zweigen in Steckdosen (nicht dargestellt) ab (bzw. münden in solchen), die an der nach außen gerichteten Kanalfläche angeordnet sind. Im Sinne der vorliegenden Erfindung werden unter Steckdosen nicht nur solche für die Versorgung mit elektrischem Strom, sondern auch die Anschlüsse für Computer, Monitore, Telefonsysteme, Fernseher, Gasleitungen u.dgl. mehr, verstanden.

Im dargestellten bevorzugten Ausführungsbeispiel besteht MVE 9 nicht nur aus dem Kanal 10 und den daran befestigten Steckdosen, sondern auch aus seitlichen Elementen 11, durch die der gesamte Modul 9 ein in etwa U-förmiges Querschnittsprofil erhält. Dieses Profil eignet sich nun dazu, eine nicht dargestellte Abdeckung, beispielsweise durch Magnetkräfte oder auch durch Aufklipsen (reversible elastische Verformung) oder ähnliches daran zu befestigen. In Verbindung mit der Vertiefung des U's zwischen den beiden Profilen 11 ist es zumeist möglich, die Steckdosen auch dann abzudecken, wenn weiterführende Leitungen in sie eingesteckt sind. Auf diese Weise kann der Anblick eines "Kabelsalates" zuverlässig vermieden werden und es werden darüber hinaus unerwünschte oder auch unbefugte Zugriffe zu den Steckdosen zumindest erschwert, und der wohnliche Charakter des Krankenzimmers verstärkt.

Der Frontbereich des Möbels 7 zwischen den beiden MVE's 9 ist als Türe 12 ausgebildet und erlaubt den Zugriff ins Innere des Möbels 7, das mit Schrankfächern, einem Hängeabteil für Kleider u.dgl. ausgerüstet sein kann.

Es ist leicht ersichtlich, daß es nicht notwendig ist, auf einem Möbel zwei MVE's 8, 9 vorzusehen, im gezeigten Ausführungsbeispiel sind die med. gasführenden MVE's 8 jeweils einzeln an einem Möbel 6 angeordnet, dies kann z.B. dann, wenn drei Betten oder mehr nebeneinander an einer Wand stehen, durchaus so geändert werden, daß auch die Möbel 6 zu beiden Seiten mit MVE's 8 versehen sind. Umgekehrt kann in speziellen Räumen, in denen nur ein Bett an der Wand steht, auch das Möbel 7, das die Module 9 mit der Elektroversorgung trägt, so ausgestaltet sein, dass es nur einen derartigen Modul, auf der dem Bett zugewandten Seite aufweist.

Erfindungswesentlich bleibt immer, dass eine längliche und im wesentlichen geschlossene MVE, die in ihrem Inneren die gesamte notwendige Verrohrung bzw. alle notwendigen Leitungen und Schläuche, ebenso wie die Steckdosen und eine Verbindungs- bzw. Anschlußeinheit aufweist, zur Versorgung verwendet wird und im fertigen Zustand in einer Art Möbel untergebracht ist. Daß dieses Möbel bevorzugt direkt auf einem Zuleitungskanal 3 aufgesetzt und positioniert wird, ist ebenso eine bevorzugte Ausgestaltung, wie die Tatsache, dass die MVE's 8, 9 in der Endkonfiguration vertikal und etwa um 45° bezüglich der Wandebene geneigt, an Kanten des Möbels 6, 7 verlaufen. Es kann bei Spezialfällen durchaus auch so sein, daß diese Module auf der direkt- dem Bett zugewandten Seite des Möbels angeordnet sind oder, dass sie horizontal liegend angeordnet sind. Schließlich ist es bei jeder dieser Möglichkeiten auch möglich, die Module so breit zu gestalten, dass zwei Steckdosen nebeneinander Platz finden (in einer Richtung normal zur Längsachse des Moduls), dies kann insbesondere dann günstig sein, wenn beispielsweise im Bereich der Intensivmedizin die Versorgung mit einer großen Anzahl von Medien notwendig ist.

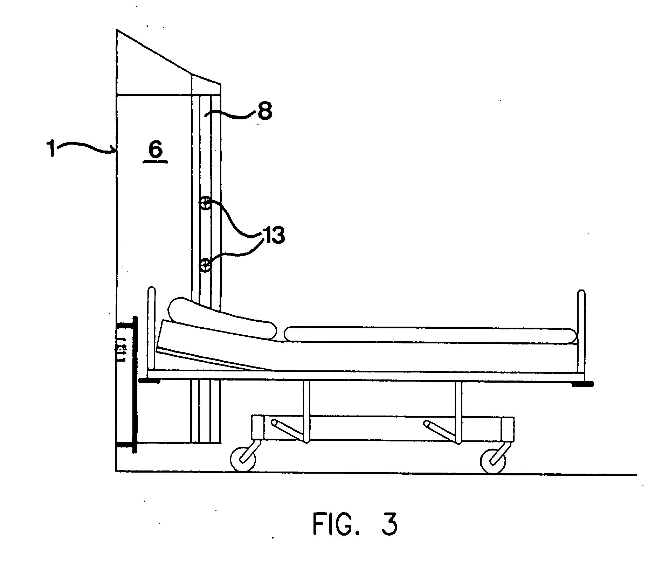

Die Fig. 3 stellt eine Ansicht quer zur Bettenlängsachse auf ein Spitalmöbel 6 dar, dabei ist die MVE 8 mit ihren Auslässen 13 für gasförmige medizinische Medien gut zu erkennen.

Die Erfindung ist nicht auf das beschriebene und dargestellte Ausführungsbeispiel beschränkt, sondern kann verschiedentlich abgewandelt werden. So ist es möglich, andere Kombinationen vorzunehmen, als gezeigt und andere Abmessungen und Ausbildungen sowohl der MVE's und auch der Möbel zu wählen.

Die verwendeten Materialien sind die im Spitalsbau und im medizintechnischen Bereich üblichen Materialien, insbesondere Edelstahl, Aluminium und verschiedene Kunststoffe und sind resistent gegen übliche Desinfektionsmittel.

## Patentansprüche

1. Medizinische Versorgungseinheit (8, 9) zur Installation in einen Krankenhauszimmer, für Krankenbetten der Normal-, Intermediär- und Intensivpflege, die länglich und im Wesentlichen geschlossen ist, mit einem Kanal zur Aufnahme aller notwendigen Leitungen und Schläuche umfassenden Medienleitungen für elektrische oder gasförmige Medien, ebenso wie Steckdosen und Auslässe (13) für die gesförmigen Medien, die mit Zuleitungen (3) verbindbar ist, die für das Zuführen der Medien zu dem Krankenhauszimmer vorgesehen sind, wobei die Versorgungseinheit als Möbelstück (6,7) ausgeführt ist **dadurch gekennzeichnet, dass** die Versorgungseinheit (B, 9) eine Verbindungs- bzw. Anschlusseinheit mit einem Anschlussverteiler mit klemmen und/oder Steckverbindungen zum Verbinden der in der im Wesentlichen geschlossen Versorgungseinheit befindlichen Medienleitungen mit den Zuleitungen (3) aufweist.

2. Medizinische Versorgungseinheit nach Anspruch 1, **dadurch gekennzeichnet, dass** sie modulartig aufgebaut ist.

3. Medizinische Versorgungseinheit nach Anspruch 1 oder 2, **dadurch gekennzeichnet, dass** sie ein Profil aufweist das einteilig oder durch ein Abdeckprofil einen geschlossenen, länglichen Hohlraum bildet, dass die Steckdosen auf einer der Längsseitenwände des Profiles angeordnet sind, dass die Verbindung- bzw. Anschlusseinheit für die Zuleitungen an einem Ende des Profils angeordnet ist und dass das andere Ende des Profiles verschlossen ist.

4. Medizinische Versorgungseinheit nach einem der voranstehenden Ansprüche, **dadurch gekennzeichnet, dass** das Profil, einstückig oder durch Verbindung mit seitlichen Profilen, auf einer Längsseite leicht konkav oder U-förmig ausgebildet ist.

5. Medizinische Versorgungseinheit nach Anspruch 4, **dadurch gekennzeichnet, dass** die leicht konkav oder U-förmig ausgebildete Längsseite durch einen Profilabschnitt unter Ausbildung eines an seinen beiden Enden ins Freie mündenden Hohlraumes abdeckbar ist.

6. Medizinische Versorgungseinheit nach Anspruch 1, **dadurch gekennzeichnet, dass** die Zuleitung der Medien in einem horizontal verlaufenden und vor einer Wand (1) befindlichen Zuleitungskanal (3) erfolgt und dass das Möbelstück (6, 7) auf dem Zuleitungskanal aufsitzt.

## Claims

1. Medical supply unit (8, 9), for installation in a hospital room, for sick-beds for normal, intermediary and intensive care, which is elongate and substantially closed, with a duct for accommodating media lines, which comprise all the necessary lines and hose, for electrical or gaseous media, as well as sockets and outlets (13) for the gaseous media, which unit can be connected to feed lines (3) provided for delivering the media to the hospital room, wherein the supply unit is constructed as a piece of furniture, **characterised in that** the supply unit (8, 9) has a connecting or attachment unit with an attachment distributor with clamps and/or plug connections for connecting the media lines located in the substantially closed supply unit to the feed lines (3).

2. Medical supply unit according to Claim 1, **characterised in that** it is of modular construction.

3. Medical supply unit according to Claim 1 or 2, **characterised in that** it has a profile which, in one part or by means of a covering profile, forms a closed, elongate hollow space, that the sockets are disposed on one of the longitudinal side walls of the profile, that the connecting or attachment unit for the feed lines is disposed at one end of the profile, and that the other end of the profile is closed.

4. Medical supply unit according to any of the preceding Claims, **characterised in that** the profile, in one piece or through being connected to lateral profiles, is formed so as to be slightly concave or U-shaped on one longitudinal side.

5. Medical supply unit according to Claim 4, **characterised in that** the slightly concave or U-shaped longitudinal side can be covered by a profile portion while forming a hollow space which leads into the open at its two ends.

6. Medical supply unit according to Claim 1, **characterised in that** the media are fed in a feed duct (3) which extends horizontally and is located in front of a wall (1), and that the piece of furniture (6, 7) is mounted on the feed duct.

## Revendications

1. Unité d'alimentation médicale (8, 9) pour installation dans une chambre d'hôpital, pour des lits de malades en soins normaux, intermédiaires et intensifs, essentiellement fermée et oblongue, avec un passage pour recevoir des conduites de fluides, comprenant tous les flexibles et conduites nécessaires, pour des fluides électriques ou gazeux, ainsi que des prises et sorties (13) pour les fluides gazeux, qui peuvent être reliées à des conduites d'alimentation (3) prévues pour l'amenée des fluides dans la chambre d'hôpital, sachant que l'unité d'alimentation est réalisée en tant que meuble (6, 7), **caractérisée en ce que** l'unité d'alimentation (8, 9) présente une unité de connexion ou de raccordement avec un distributeur de raccordements avec des bornes et/ou des raccords mâles et femelles, pour relier les conduites de fluides situées dans l'unité d'alimentation essentiellement fermée aux conduites d'alimentation (3).

2. Unité d'alimentation médicale selon la revendication 1, **caractérisée en ce qu'**elle est construite de façon modulaire.

3. Unité d'alimentation médicale selon la revendication 1 ou 2, **caractérisée en ce qu'**elle présente un profilé qui forme, d'une seul pièce ou par un profilé de recouvrement, un espace creux, oblong, fermé, **en ce que** les prises sont disposées sur l'une des parois du grand côté du profilé, **en ce que** l'unité de connexion ou de raccordement pour les conduites d'alimentation est disposée au niveau d'une extrémité du profilé, et **en ce que** l'autre extrémité du profilé est fermée.

4. Unité d'alimentation médicale selon l'une des précédentes revendications, **caractérisée en ce que** le profilé est réalisé légèrement concave ou en forme de U, d'une seule pièce ou par liaison avec des profilés latéraux, sur un grand côté.

5. Unité d'alimentation médicale selon la revendication 4, **caractérisée en ce que** le grand côté réalisé légèrement concave ou en forme de U peut être recouvert par une section de profilé en formant un espace creux débouchant librement au niveau de ses deux extrémités.

6. Unité d'alimentation médicale selon la revendication 1, **caractérisée en ce que** l'amenée des fluides s'effectue dans une conduite d'alimentation (3) horizontale et placée devant une paroi (1) et **en ce que** le meuble (6, 7) repose sur la conduite d'alimentation.
